# EUROPÄISCHE PATENTSCHRIFT

(11) **EP 0 504 208 B1**
(45) Veröffentlichungstag und Bekanntmachung des Hinweises auf die Patenterteilung: **02.03.1994**
(21) Anmeldenummer: 91900201.4
(22) Anmeldetag: 05.12.1990
(51) Int. Cl.: G11B 5/56

(54) **LAUFWERKCHASSIS FÜR EIN MAGNETBANDGERÄT**
DRIVE CHASSIS FOR A MAGNETIC TAPE RECORDER
CHASSIS DU MECANISME D'ENTRAINEMENT POUR MAGNETOPHONE

(30) Priorität: 16.12.1989 DE 3941594
(43) Veröffentlichungstag der Anmeldung: 23.09.1992
(73) Patentinhaber: Deutsche Thomson-Brandt GmbH, 78003 Villingen-Schwenningen (DE)
(72) Erfinder: SCHANDL, Hartmut, A-1110 Wien (AT); WEISSER, Fritz, D-7742 St. Georgen (DE)
(74) Vertreter: Einsel, Robert, Dipl.-Ing.
(86) Internationale Anmeldenummer: EP9002098
(87) Internationale Veröffentlichungsnummer: WO9109398

(56) Entgegenhaltungen:
- US-A- 4 550 352
- US-A- 4 875 123
- PATENT ABSTRACTS OF JAPAN, Bd. 10, Nr. 48 (P-431)(2105), 25. Februar 1986 & JP-A-60-193120

## Beschreibung

Die Erfindung betrifft ein Magnetbandgerät nach dem Oberbegriff des Anspruches 1.

Es ist üblich, Magnetköpfe in durch Längsspuren eines Magnetbandrecorders vorgegebener Anordnung in einen Kombikopf zu integrieren und diesen dann auf einer Trägerplatte zu befestigen, welche zwischen einer Kopftrommel und einer Capstanwelle auf einem Laufwerkchassis federnd gelagert wird.

Von der korrekten Justierung der Magnetköpfe bzw. des Kombikopfes hängt bekannterweise ebenso die Magnetisierung eines Magnetbandes während der Aufzeichnung wie auch die Qualität der Wiedergabe sowohl der Eigenaufzeichnung als auch fremdbespielter Kassetten ab. Deshalb müssen Trägerplatten für derartige Magnetköpfe mit Einrichtungen zur Justierung der Magnetköpfe hinsichtlich Neigungswinkel für den Band/Kopf-Kontakt, Azimut und Höhe über dem Laufwerkchassis versehen sein.

Kombiköpfe handelsüblicher VHS-Videorecorder enthalten neben Aufnahme/Wiedergabe-Köpfen (A/W-Köpfe) für Audiosignale in Längsspuren des Magnetbandes und einem Löschkopf für diese Signale einen weiteren Magnetkopf (CTL-Kopf) zur Aufzeichnung und Wiedergabe eines Steuersignals, auch Kontrollsignal (CTL) genannt. Dieses dient bekannterweise im Wiedergabebetrieb des Recorders dem Bandservosystem als Referenzsignal zur phasengenauen Regelung des Bandantriebes und wird während des Aufnahmebetriebes aus den Bildsynchronimpulsen eines Videoeingangssignals gewonnen.

Um Synchronität auch bei der Abtastung fremdbespielter Kassetten zwischen den in Schrägspuren des Magnetbandes aufgezeichneten Videosignalen und den zugehörigen Audiosignalen in den Längsspuren zu gewährleisten, ist es zusätzlich erforderlich, den X-Abstand (sich aus der jeweiligen Recordersystemnorm ergebende Bandlänge zwischen dem ortsfesten Kombikopf und einem vorgegebenen Bezugspunkt am Ende der Bandumschlingung der Kopftrommel, z.B. 79,244 mm bei einem VHS-Recorder zwischen CTL-Kopf und Bezugspunkt am Ende der Bandumschlingung) des Kombikopfes zu justieren, wobei die Justierung des X-Abstandes, im Gegensatz zu den vorgenannten Justierungen, auch auf elektronische Weise mittels eines in einen entsprechenden Betriebsmodus schaltbaren Mikroprozessors durchführbar ist. Ein derartiges elektronisches Justierverfahren mit einem solchen Mikroprozessor ist in der DE 35 28 452 näher beschrieben. Magnetbandrecorder, bei denen der X-Abstand des Kombikopfes auf elektronische Weise justierbar ist, benötigen demzufolge keine zusätzliche Einstelleinrichtung für die Kopfträgerplatte.

Es ist weiterhin bekannt, daß für die federnde Lagerung von derartigen Kopfträgerplatten spannbare Druckfedern vorgesehen sind, die ihrerseits die Trägerplatte gegen höhenverstellbare Anschläge zu drücken vermögen, wobei die höhenverstellbaren Anschläge einerseits zur Vorspannungserzeugung der ihnen jeweils zugeordneten Druckfedern und andererseits für die vorgenannten verschiedenen Justierungen des Kopfes in Bezug auf das Magnetband dienen.

Aus der US-A-4 550 352 ist eine Kopfträgerplatte bekannt, die in der Höhe über dem Chassis nicht einstellbar ist und einen U-förmig ausgebildeten mittleren Bereich aufweist, in dem der Kopf befestigt ist. Der Kopf ist dabei so angeordnet, daß er durch eine elastische Auslenkung des mittleren Bereichs um die Krümmungsachse mittels einer Einstellschraube hinsichtlich seines Neigungswinkels für den Band/Kopf-Kontakt einstellbar ist. Zur Azimuteinstellung des Kopfes wird dagegen die Kraft einer vorgespannten spiralförmigen Druckfeder benutzt.

Es sind ferner Magnetbandrecorder bekannt, bei denen die Capstanwelle außerhalb der in den Magnetbandrecorder eingelegten Kassette angeordnet ist.

Aufgabe der Erfindung ist es, eine Halterung für einen zwischen Kopftrommel und Capstanwelle angeordneten Kopf konstruktiv so auszubilden, daß sie ohne großen Arbeitsaufwand auf dem Laufwerkchassis montierbar ist sowie Justierungen des Kopfes hinsichtlich Neigungswinkel für den Band/Kopf-Kontakt, Azimut und in Bezug auf die Magnetbandlage über dem Laufwerkchassis auf einfache Weise ermöglicht.

Diese Aufgabe wird durch die im Anspruch 1 angegebene Erfindung gelöst. Vorteilhafte Weiterbildungen der Erfindung sind in den Unteransprüchen angegeben.

Der Erfindung liegt die Idee zugrunde, eine über dem Laufwerkchassis höhenverstellbare Trägerplatte für einen Kombikopf so als zweifach auslenkbares Federsystem auszubilden, daß mittels einer ersten elastischen Auslenkung die Azimutjustierung des Kopfes und mittels einer zweiten elastischen Auslenkung die Neigungswinkeljustierung des Kopfes für den Band/Kopf-Kontakt bewirkt werden kann.

Im Prinzip wird ein als Trägerplatte verwendetes Teil, z.B. aus Stahlblech bestehend, derartig gestaltet, daß eine erste, annähernd gestreckte Blattfeder, mit einer geringen Abwinkelung des festeinzuspannenden Teils gegenüber dem federnden Teil, sowie eine zweite, im mittleren Bereich quer zu der gestreckten Blattfeder liegende, annähernd U-förmige Blattfeder mit einem freien Schenkel entsteht, an dessen Außenseite der Kopf so befestigt wird, daß die Längsachse des Kopfes senkrecht zum Schenkel verläuft. Den federnden Teil der annähernd gestreckten Blattfeder bildet somit der zwischen den dabei entstandenen zwei seitlichen Endbereichen annähernd U-förmig ausgebildete mittlere Bereich und der Endbereich, welcher dem den festeinzuspannenden Teil der gestreckten Blattfeder bildenden Endbereich gegenüberliegt.

Für die Anordnung der Trägerplatte zwischen Kopftrommel und Capstanwelle ist für die beiden seitlichen Endbereiche der Trägerplatte je eine zum Laufwerkchassis senkrechte Führung mit je einem höhenverstellbaren Anschlag vorgesehen, wobei der höhenverstellbare Anschlag, der der Capstanwelle zugewandt ist, vorzugsweise zur Höheneinstellung der Trägerplatte verwendet wird und damit zur Justierung des Kopfes in Bezug zur Magnetbandlage über dem Laufwerkchassis dient, während dann der gegenüberliegende höhenverstellbare Anschlag zur elastischen Auslenkung der annähernd gestreckten Blattfeder und damit zur Justierung des Azimut des Kopfspaltes dient. Hierzu ist es erforderlich, die Trägerplatte gegen die beiden höhenverstellbaren Anschläge zu drücken. Dies geschieht z.B. mit Hilfe einer Druckfeder, welche vorzugsweise am Boden der der Capstanwelle zugewandeten Führung gelagert und so vorgespannt wird, daß sie die Trägerplatte gegen die beiden höhenverstellbaren Anschläge zu drücken vermag.

Für die Neigungswinkeljustierung des Kopfes für den Band/Kopf-Kontakt ist eine einstellbare Spannschraube vorgesehen, mittels welcher der den Kopf tragende Schenkel vorzugsweise zum darüberliegenden federnden Teil der annähernd gestreckten Blattfeder hin auslenkbar ist.

Für den jeweiligen Einstellbereich zur Justierung von Azimut und Neigungswinkel des Kopfes sind entsprechende Federkräfte notwendig. Um diese in der Trägerplatte speichern zu können, wird bei der Herstellung der Trägerplatte, wie zuvor erwähnt, der mittlere Bereich der U-Form nur angenähert sowie der den festeinzuspannden Teil der gestreckten Blattfeder bildende seitliche Endbereich mit einer geringen Abwinkelung versehen. Es hat sich erwiesen, daß bei Verwendung von Feinblech MUST 3 LGBK mit einer Materialdicke von 0,8 mm für eine derartige Trägerplatte bereits eine Abweichung von der U-Form von etwa 1° bis 3° und eine Abwinkelung des den festeinzuspannenden Teil der gestreckten Blattfeder bildenden seitlichen Endbereiches von etwa ebenfalls 1° bis 3° ausreichen, um genügend große Federkräfte speichern zu können.

Die Erfindung wird im folgendem anhand eines Ausführungsbeispiels mittels der Zeichnungen erläutert. Darin zeigen:
- Fig. 1: in vergrößertem Maßstab eine Trägerplatte mit einem Kombikopf für ein erfindungsgemäßes Magnetbandgerät in perspektivischer Darstellung,
- Fig. 2a: in Seitenansicht schematisch einen Ausschnitt eines Laufwerkes mit der Trägerplatte gemäß Fig. 1 und
- Fig. 2b: den Laufwerkausschnitt aus Fig. 2a in Draufsicht.

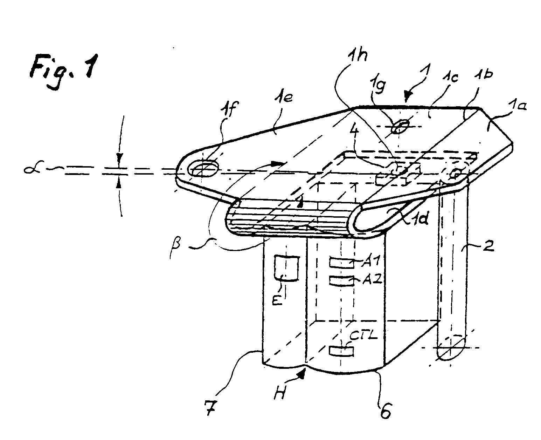

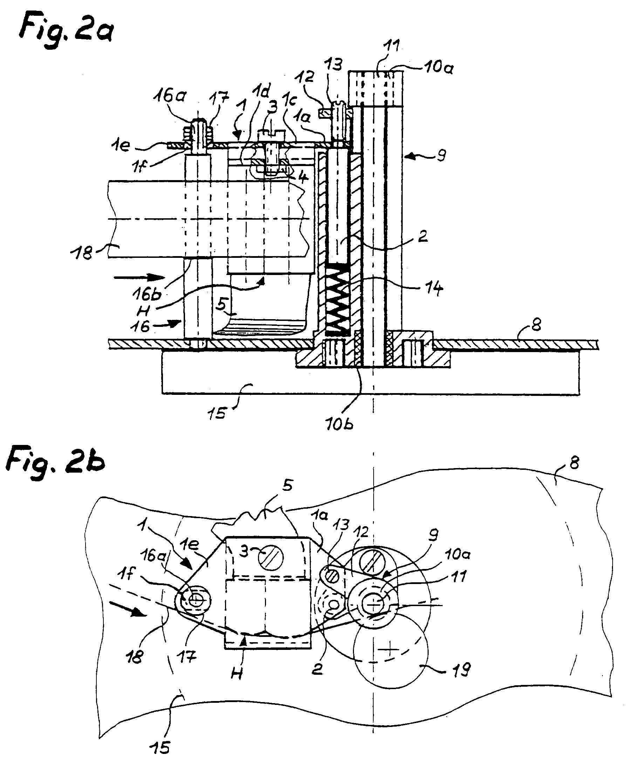

Fig. 1 zeigt in perspektischer Darstellung eine Trägerplatte 1, welche aus 0,8 mm dickem Feinblech MUST 3 LGBK hergestellt ist und einen ersten 1a und zweiten 1e seitlichen Endbereich sowie einen zwischen den Bereichen 1a; 1e befindlichen mittleren Bereich aufweist. Der mittlere Bereich ist als näherungsweise U-förmig gekrümmte Blattfeder ausgebildet, deren freier Schenkel 1d einen beispielhaften Kombikopf H für einen handelsüblichen VHS-Videorecorder trägt. Der Kombikopf H weist einen ersten 6 und zweiten 7 Kopfblock auf, deren jeweilige Längsachse senkrecht zum freien Schenkel 1d verläuft und deren jeweilige der Krümmung zugewandte bogenförmige Seitenfläche als Kopfspaltseite ausgebildet ist, wobei sich im ersten Kopfblock 6 ein Kontrollkopf CTL für Referenzsignale für Kopftrommel- und Bandantrieb, ein Audiokopf A1 sowie ein Audiokopf A2 und im zweiten Kopfblock 7 ein Audiolöschkopf E befinden, in einer Anordnung, wie sie bei einem VHS-Videorecorder für die Aufzeichnung und/oder Wiedergabe von Signalen in den Längsspuren eines in Fig. 2a und 2b angedeuteten Magnetbandes 18 vorgegeben ist.

Der dem freien Schenkel 1d gegenüberliegende Schenkel 1c bildet zusammen mit dem zweiten seitlichen Endbereich 1e den federnden Teil einer näherungsweise gestreckten Blattfeder, welcher gegenüber dem ersten seitlichen Endbereich 1a, an dem ein zylindrisches Gleitelement 2 befestigt ist, zur Azimutjustierung des Kombikopfes H elastisch auslenkbar ist. Hierzu weist der Schenkel 1c gegenüber dem ersten seitlichen Endbereich 1a eine Abknickung 1b für eine Höhenabwinkelung α des federnden Teils um etwa 1° bis 3° auf, gegen die der federnde Teil zur Azimutjustierung des Kombikopfes H elastisch auslenkbar ist. Die Längsachse des Gleitelementes 2 verläuft senkrecht zu dem Endbereich 1a. In dem gegenüberliegenden Endbereich 1e ist ein Langloch 1f vorhanden, welches ebenso wie das Gleitelement 2 zu in Fig. 2a zu sehenden senkrechten Führungen der Trägerplatte 1 über einem Laufwerkchassis 8 dient.

Mittels einer in Fig. 2a und 2b zu sehenden einstellbaren Spannschraube 3, welche durch entsprechende Bohrungen 1g; 1h in beiden Schenkeln 1c; 1d gesteckt und in eine an der Außenseite des Schenkels 1d befestigte Mutter 4 eingeschraubt wird, ist zur Justierung des Neigungswinkels des Kombikopfes H für den Band/Kopf-Kontakt der freie Schenkel 1d zum Schenkel 1c hin elastisch auslenkbar. Der Winkelbereich für die Justierung des Neigungswinkels des Kombikopfes H liegt dabei über einem Winkel β von etwa 177° bis 179°, welchen der näherungsweise U-förmig gekrümmte mittlere Bereich im dargestellten ungespannten Zustand aufweist.

Fig. 2a zeigt in Seitenansicht schematisch einen Ausschnitt eines Laufwerkes, bei dem der erwähnte X-Abstand des Kombikopfes H auf elektronische Weise justierbar ist, mit der Trägerplatte 1 gemäß Fig. 1 mit teilweisen Schnitten durch die dargestellten Elemente. Fig. 2b zeigt schematisch den Laufwerkausschnitt in Draufsicht. Der Kombikopf H ist hinsichtlich der Höhe in Bezug auf die Magnetbandlage über dem Laufwerkchassis 8, der Azimutstellung und des Band/Kopf-Kontaktes justiert.

An dem Laufwerkchassis 8 ist ein Capstanmotor 15 angeordnet, dessen als Capstanwelle ausgebildete Motorwelle 11 außerhalb einer nicht dargestellten Bandkassette liegt und in einem mit Lagerbuchsen 10a; 10b versehenen Lagerbock 9 gelagert ist. An der der Bandkassette abgewandten Lagerbockseite ist am Lagerbock 9 ein topfartiges Führungsteil ausgebildet, in dem das am ersten seitlichen Endbereich 1a der Trägerplatte 1 befestigte Gleitelement 2 auf einer gespannten Druckfeder 14 gelagert ist. Oberhalb des topfartigen Führungsteils ist am Lagerbock 9 außerdem ein seitlicher Vorsprung 12 ausgebildet, in welchen eine Stiftschraube 13 durchgeschraubt ist, die im ersten seitlichen Endbereich 1a mit der Trägerplatte 1 in Eingriff steht und über das Gleitelement 2 die Druckfeder 14 gespannt hält und zur Justierung des Kombikopfes H in Bezug auf die Magnetbandlage über dem Laufwerkchassis 8 dient. In dem Langloch 1f im gegenüberliegenden zweiten seitlichen Endbereich 1e der Trägerplatte 1 ist der kegelig ausgebildete untere Teil einer Rändelmutter 17 in Eingriff, welche zur Azimutjustierung des Kombikopfes H dient. Dabei bewirkt der kegelig ausgebildete untere Teil auch die senkrechte Führung der Trägerplatte 1 im zweiten seitlichen Endbereich 1e. Die Rändelmutter 17 ist auf ein als Gewindestift ausgebildetes oberes Endstück 16a eines ortsfesten Bandumlenkstiftes 16 aufgeschraubt. Der Bandumlenkstift 16 weist darüber hinaus einen Führungsflansch 16b zur Höhenführung des Magnetbandes 18 auf. Zusätzlich wirkt der Bandumlenkstift 16 mechanischen Längsschwingungen im Magnetband 18 entgegen, welche bei Rotation einer nicht dargestellten Kopftrommel sowohl von einer fertigungstoleranzbedingten Kopftrommelexzentrizität als auch von mit der Kopftrommel rotierenden Magnetköpfen beim Eintauchen in das die Kopftrommel umschlingende Magnetband 18 erzeugt werden, und welche sonst unabgeschwächt an den Kombikopf H gelangen würden. Derartig erzeugte mechanische Längsschwingungen wirken sich u.a. als Tonhöhenschwankungen bei der Wiedergabe von Audiosignalen in den Längsspuren des Magnetbandes 18 aus.

Der Kombikopf H ist mit dem Magnetband 18 in Eingriff, welches von der Capstanwelle unter Mitwirkung einer angedeuteten Gummiandruckrolle (GA-Rolle) 19 in der durch einen Pfeil gekennzeichneten Richtung angetrieben wird. An der Rückseite des Kombikopfes Hist eine flexible Leiterplatte (flexible wire board) 5 angeschlossen, welche die in Fig. 1 angedeuteten Magnetköpfe A1; A2; CTL und E mit entsprechenden, nicht dargestellten, signalverarbeitenden Schaltungsteilen elektrisch verbindet.

Der Lagerbock 9 mit Vorsprung 12 und topfartigem Führungsteil für das Gleitelement 2 bilden ein einteiliges Fertigungsteil.

Mittels der in der Druckfeder 14 jeweils gespeicherten Kraft wird über das Gleitelement 2 die als Blattfedernelement ausgebildete Trägerplatte 1 einerseits gegen die in den Lagerbockvorsprung 12 eingeschraubte, einen ersten einstellbaren Höhenanschlag bildende Stiftschraube 13 und andererseits gegen die auf das Endstück 16a des ortsfesten Bandumlenkstiftes 16 aufgeschraubte, einen zweiten einstellbaren Höhenanschlag bildende Rändelmutter 17 gedrückt. Die in der Druckfeder 14 gespeicherte Kraft setzt sich dabei aus einem ersten, von der Einschraubtiefe der Stiftschraube 13 in den Lagerbockvorsprung 12 abhängigen und einem zweiten, durch die ortsfeste Höhenlage des Lagerbockvorsprunges 12 vorgegebenen Anteil zusammen.

Die Einstellbereiche des Kopfes H hinsichtlich der Justierung seines Azimuts und seiner Höhe über dem Laufwerkchassis 8 liegen somit in einer ersten zum Laufwerkchassis 8 senkrechten Ebene. Der Einstellbereich des Kopfes H hinsichtlich der Neigungswinkeljustierung für den Band/Kopf-Kontakt liegt in einer zweiten Ebene, welche stets senkrecht in der ersten Ebene steht.

Neben der einfachen Montage der Trägerplatte 1 ergibt sich aus der Erfindung der Vorteil, daß dadurch, daß die elastischen Auslenkungen der Trägerplatte 1 bei den Justierungen des Kopfes H hinsichtlich Neigungswinkel für den Band/Kopf-Kontakt und Azimut sich gegenseitig nicht beeinflussen, Justierungen des Kopfes H hinsichtlich Höhe über dem Laufwerkchassis 8, Neigungswinkel für den Band/Kopf-Kontakt und Azimut relativ schnell durchgeführt werden können.

Die erfindungsgemäße Lösung ist besonders geeignet für Laufwerke von Magnetbandrecordern nach dem Schrägspurverfahren, bei denen die Capstanwelle außerhalb einer in das Laufwerk eingelegten Kassette angeordnet und die Justierung des jweiligen ortsfesten Kombikopfes hinsichtlich des X-Abstandes auf elektronische Weise durchführbar ist.

## Patentansprüche

1. Magnetbandgerät mit einem ortsfesten, mindestens einen Kopfspalt aufweisenden Magnetkopf (H) zur Abtastung und/oder Aufnahme von Signalen in Längsspur eines Magnetbandes (18), für den als Halterung auf einem Laufwerkchassis (8) eine Trägerplatte (1) vorgesehen ist, die aus einem zum Chassis (8) im wesentlichen parallel angeordneten Teil besteht, das einen ersten und zweiten seitlichen Endbereich (1a; 1e) sowie einen zwischen den beiden Endbereichen (1a; 1e) liegenden näherungsweise U-förmig gekrümmten mittleren Bereich aufweist, so daß im mittleren Bereich ein erster, in den beiden seitlichen Endbereichen (1a, 1e) eingespannter Schenkel (1c) und ein zweiter, freier Schenkel (1d) ausgebildet sind, wobei der zweite Schenkel (1d) den Magnetkopf (H) trägt und zum Zwecke der Neigungswinkeljustierung des Magnetkopfes (H) für den Band/Kopf-Kontakt mit einem Einstellmittel gegenüber dem ersten Schenkel (1c) elastisch auslenkbar ist, und mit je einem weiteren, an dem jeweiligen Endbereich (1e; 1a) der Trägerplatte (1) angreifenden Einstellmittel zum Zwecke der Azimutjustierung des Magnetkopfes (H) bzw. seines Kopfspaltes und der Höhenjustierung des Magnetkopfes (H) in Bezug auf die Sollage des Magnetbandes (18) über dem Chassis (8), wobei die Bereiche der Trägerplatte (1) zusammen eine näherungsweise gestreckte Blattfeder bilden, **dadurch gekennzeichnet,** daß der mittlere Bereich zusammen mit dem zweiten seitlichen Endbereich (1e) den federnden Teil bildet, dessen Streckrichtung im wesentlichen parallel zur Krümmungsachse des als näherungsweise U-förmig gekrümmte Blattfeder ausgebildeten mittleren Bereiches verläuft, während der erste seitliche Endbereich (1a), an dem das Einstellmittel zur Höhenjustierung des Magnetkopfes (H) angreift, den festeingespannten Teil bildet, und daß im ungespannten Zustand der gestreckten Blattfeder der federnde Teil gegenüber dem ersten seitlichen Endbereich (1a) eine durch eine Abknickung (1b) des ersten seitlichen Endbereiches (1a) bedingte Höhenabwicklung (α) aufweist, gegen die zum Zwecke der Azimutjustierung des Kopfspaltes der federnde Teil mittels des Einstellmittels für die Azimutjustierung des Kopfspaltes elastisch auslenkbar ist.

2. Gerät nach Anspruch 1, **dadurch gekennzeichnet,** daß der mittlere Bereich um wenige Grad kleiner als 180° gekrümmt ist, so daß die elastische Auslenkung des zweiten, den Magnetkopf (H) tragenden, freien Schenkels (11d) zum ersten Schenkel (1c) hin gerichtet ist, wobei als Einstellmittel für die Neigungswinkeljustierung des Magnetkopfes (H) für den Band/Kopf-Kontakt eine beide Schenkelenden kraftschlüssig verbindende, als Zugschraube ausgebildete, einstellbare Spannschraube (3) verwendet wird.

3. Gerät nach Anspruch 1, **dadurch gekennzeichnet,** daß der mittlere Bereich um wenige Grad größer als 180° gekrümmt ist, so daß die elastische Auslenkung des zweiten, den Magnetkopf (H) tragenden, freien Schenkels (1d) vom ersten Schenkel (1c) weg gerichtet ist, wobei als Einstellmittel für die Neigungswinkeljustierung des Magnetkopfes (H) für den Band/Kopf-Kontakt eine beide Schenkelenden kraftschlüssig verbindende, als Druckschraube ausgebildete, einstellbare Spannschraube verwendet wird.

4. Gerät nach einem oder mehreren der Ansprüche 1 - 3, **da****durch gekennzeichnet,** daß der erste seitliche Endbereich (1a) am Ende eines aus einem zum Laufwerkchassis (8) senkrecht angeordneten topfartigen Führungsteil herausragenden Teilstückes eines Gleitelementes (2) befestigt ist, das auf einer in dem Führungsteil angeordneten, gespannten Druckfeder (14) aufliegt, welche über das Gleitelement (2) die Trägerplatte (1) einerseits gegen das als einstellbarer Höhenanschlag ausgebildete Einstellmittel für die Höhenjustierung des Magnetkopfes (H) und andererseits gegen das ebenfalls als einstellbarer Höhenanschlag ausgebildete Einstellmittel für die Azimutjustierung des Kopfspaltes zu drücken vermag, wobei die in der Druckfeder (14) gespeicherte Kraft sich aus einem Vorspannungsanteil und einem durch die Höhenjustierung des Magnetkopfes (H) bewirkten Spannungsanteil zusammensetzt.

5. Gerät nach Anspruch 4, **dadurch gekennzeichnet,** daß das Führungsteil in einem Lagerbock (9) einer außerhalb einer Magnetbandkassette gelegenen als Capstanwelle ausgebildeten Motorwelle (11) angeordnet ist.

6. Gerät nach Anspruch 4 oder 5, **dadurch gekennzeichnet,** daß der einstellbare Höhenanschlag für die Höhenjustierung des Magnetkopfes (H) aus einer auf den ersten seitlichen Endbereich (1a) angreifenden Stiftschraube (13) und einem zur Erzeugung des Vorspannungsanteiles der Druckfeder (14) in vorgegebener Höhenlage an dem Lagerbock (9) angeordneten Vorsprung (12) gebildet wird, welcher ein durchgehendes Gewinde aufweist, durch das die Stiftschraube (13) durchgeschraubt ist.

7. Gerät nach Anspruch 5 oder 6, **dadurch gekennzeichnet,** daß der Lagerbock (9) mit Vorsprung (12) und topfartigem Führungsteil für das Gleitelement (2) ein einteiliges Fertigungstück bilden.

8. Gerät nach einem oder mehreren der Ansprüche 1 - 7, **da****durch gekennzeichnet,** daß auf dem Laufwerkchassis (8) ein Bandumlenkstift (16) angeordnet ist, welcher ein oberes, als Gewindestift ausgebildetes Endstück (16a) für eine in der Höhe über dem Laufwerkchassis (8) einstellbare, mit dem zweiten seitlichen Endbereich (1e) in Eingriff stehende Rändelmutter (17) aufweist, welche sowohl zur Azimutjustierung des Kopfspaltes als auch zur senkrechten Führung der Trägerplatte (1) im zweiten seitlichen Endbereich (1e) dient.

9. Gerät nach einem oder mehreren der Ansprüche 1 - 5, **dadurch gekennzeichnet,** daß die elektrische Verbindung des Magnetkopfes (H) mit entsprechenden signalverarbeitenden Schaltungsteilen des Magnetbandgerätes über eine flexible Leiterplatte (5) erfolgt.

## Claims

1. Magnetic tape device with a magnetic head (H) having at least one head gap and intended for scanning and/or receiving signals in a longitudinal track of a magnetic tape (18) for which a carrier plate (1) is provided as a mounting on a mechanism chassis (8), which carrier plate consists of a part which is arranged substantially parallel to the chassis (8) and has a first and a second lateral end region (1a; 1e) as well as a central region curved in an approximately U shape lying between the two end regions (1a; 1e), so that there are formed in the central region a first arm (1) which is gripped in the two lateral end regions (1a, 1e) and a second free arm (1d), wherein the second arm (1d) bears the magnetic head and for the purpose of adjusting the angle of inclination of the magnetic head (H) for tape/head contact can be resiliently deflected by an adjusting means with respect to the first arm (1c), and with a further adjusting means engaging on each end region (1e; 1a) of the carrier plate for the purpose of adjusting the azimuth of the magnetic head (H) or the head gap thereof and adjusting the height of the magnetic head (H) with reference to the theoretical position of the magnetic tape (18) over the chassis (8), wherein the regions of the carrier plate (1) together form an approximately elongated leaf spring, characterised in that the central region together with the second lateral end region (1e) forms the springing part, the direction of elongation of which runs substantially parallel to the axis of curvature of the central region which is constructed as an approximately U-shaped curved leaf spring, whilst the first lateral end region (1a) on which the adjusting means for adjusting the height of the magnetic head (H) engages forms the firmly gripped part, and that in the unloaded state of the elongated leaf spring the springing part has a height development (α) with respect to the first lateral end region (1a) which is caused by a bend (1b) in the first lateral end region (1a) and towards which the springing part can be resiliently deflected by means of the adjusting means for the adjustment of the azimuth of the head gap for the purpose of adjusting the azimuth of the head gap.

2. Device according to Claim 1, characterised in that the central region is curved by a few degrees less than 180°, so that the resilient deflection of the second free arm (1d) bearing the magnetic head (H) is directed towards the first arm (1c), wherein an adjustable tightening screw (3) which is constructed as a tension screw connecting the two arm ends by force-locking is used as the setting means for adjusting the angle of inclination of the magnetic head (H) for the tape/head contact.

3. Device according to Claim 1, characterised in that the central region is curved by a few degrees more than 180°, so that the resilient deflection of the second free arm (1d) bearing the magnetic head (H) is directed away from the first arm (1c), wherein an adjustable tightening screw (3) which is constructed as a pressing screw connecting the two arm ends by force-locking is used as the setting means for adjusting the angle of inclination of the magnetic head (H) for the tape/head contact.

4. Device as claimed in one or several of Claims 1 - 3, characterised in that the first lateral end region (1a) is fixed on the end of part of a slide element (2) which projects out of a cup-like guide part arranged perpendicular to the mechanism chassis (8) and rests on a tensioned compression spring (14) arranged in the guide part, which spring can press the carrier plate (1) by means of the slide element (2) on the one hand against the adjusting means, constructed as an adjustable height stop, for adjusting the height of the magnetic head (H) and on the other hand against the adjusting means, equally constructed as an adjustable height stop, for adjusting the azimuth of the head gap, wherein the force stored in the compression spring (14) is made up of a pretensioning portion and a tensioning portion effected by the height adjustment of the magnetic head (H).

5. Device according to Claim 4, characterised in that the guide part is arranged in a bearing block (9) of a motor shaft (11) which is placed outside a magnetic tape cassette and is constructed as a capstan.

6. Device according to Claim 4 or 5, characterised in that the adjustable height stop for the adjustment of the height of the magnetic head (H) is formed by a stud (13) engaging on the first lateral end region (1a) and a projection (12) arranged at a predetermined height on the bearing block (9) for producing the pretensioning portion of the compression spring (14), which projection has a thread running through it through which the stud (13) is screwed.

7. Device according to Claim 5 or 6, characterised in that the bearing block (9) with the projection (12) and cup-like guide part for the slide element (2) form an integral production part.

8. Device according to one or several of Claims 1 - 7, characterised in that there is arranged on the mechanism chassis (8) a tape deflecting pin (16) which has an upper end piece (16a) constructed as a threaded pin for a knurled nut (17) which can be adjusted in height above the mechanism chassis (8), is in engagement with the second lateral end region (1e) and serves both for adjusting the azimuth of the head gap and for vertical guiding of the carrier plate (1) in the second lateral end region (1e).

9. Device according to one or several of Claims 1 - 5, characterised in that the electrical connection of the magnetic head (H) to corresponding signal-processing circuit parts of the magnetic tape device is made by a flexible circuit board (5).

## Revendications

1. Appareil à bande magnétique avec une tête magnétique (H) stationnaire, qui présente au moins un entrefer de tête pour le balayage et/ou la réception de signaux dans une piste longitudinale de bande magnétique (18), tête pour laquelle il est prévu une plaque de support (1), comme support sur un châssis de dérouleur (8), qui est constituée par une partie placée essentiellement parallèlement par rapport au châssis (8) qui présente une première et une seconde zone d'extrémité latérale (1a ; 1e) ainsi qu'une zone centrale courbée approximativement en forme de U qui se situe entre les deux zones d'extrémité (1a ; 1e) si bien qu'un premier montant (1c), serré dans les deux zones d'extrémité latérales (1a, 1e), et un second montant libre (1d) sont formés dans la zone centrale, le second montant (1d) portant la tête magnétique (H) et étant déviable élastiquement par rapport au premier montant (1c) avec un organe de réglage pour effectuer l'ajustage de l'angle d'inclinaison de la tête magnétique (H) pour le contact bande/tête, et avec respectivement un autre organe de réglage qui vient en prise sur chaque zone d'extrémité respective (1e ; 1a) de la plaque de support (1) pour l'ajustage de l'angle azimutal de la tête magnétique (H) ou de son entrefer de tête et de l'ajustage en hauteur de la tête magnétique (H) par rapport à la position nominale de la bande magnétique (18) au-dessus du châssis (8), les zones de la plaque de support (1) formant ensemble un ressort à lame approximativement tendu, **caractérisé en ce** que la zone centrale forme avec la seconde zone d'extrémité latérale (1e) la partie élastique dont le sens d'allongement est essentiellement parallèle à l'axe de courbure de la zone centrale configurée comme ressort à lame approximativement recourbé en forme de U, tandis que la première zone d'extrémité latérale (1a) sur laquelle l'organe de réglage vient prendre pour l'ajustage en hauteur de la tête magnétique (H) forme la partie serrée et, qu'à l'état non tendu du ressort à lame tendu, la partie élastique présente, par rapport à la première zone d'extrémité latérale (1a), un développement en hauteur (α) conditionné par une coudure (1b) de la première zone d'extrémité latérale (1a) contre laquelle la partie élastique peut être déviée élastiquement, pour l'ajustage de l'angle azimutal de l'entrefer de tête, au moyen de l'organe de réglage pour l'ajustage de l'angle azimutal de l'entrefer de tête.

2. Appareil selon la revendication 1, **caractérisé en ce** que la zone centrale est courbée de quelques degrés de moins que 180° si bien que la déviation élastique du second montant libre (1d) qui porte la tête magnétique (H) est dirigée vers le premier montant (1c), une vis de serrage (3) réglable, configurée comme vis de tension, qui relie de manière clabotée les deux extrémités de montant, est utilisée comme organe de réglage pour l'ajustage de l'angle d'inclinaison de la tête magnétique (H) pour le contact bande/tête.

3. Appareil selon la revendication 1, **caractérisé en ce** que la zone centrale est courbée de quelques degrés de plus que 180° si bien que la déviation élastique du second montant libre (1d) qui porte la tête magnétique (H) est détournée du premier montant (1c), une vis de serrage réglable, configurée comme vis de pression, qui relie de manière clabotée les deux extrémités de montant, est utilisée comme organe de réglage pour l'ajustage de l'angle d'inclinaison de la tête magnétique (H) pour le contact bande/tête.

4. Appareil selon l'une ou plusieurs des revendications 1 à 3, **caractérisé en ce** que la première zone d'extrémité latérale (1a) est fixée à l'extrémité d'un morceau d'un élément glissant (2) qui fait saillie d'une pièce de guidage de type pot qui est placée perpendiculairement au châssis du dérouleur (8), élément glissant qui repose sur un ressort de pression (14) tendu qui est placé dans la pièce de guidage, ce ressort pouvant appuyer, par l'intermédiaire de l'élément glissant (2), la plaque de support (1) d'une part contre l'organe de réglage pour l'ajustage de la hauteur de la tête magnétique (H) qui est configuré comme une butée en hauteur réglable et d'autre part cotnre l'organe de réglage pour l'ajustage de l'angle azimutal de l'entrefer de tête qui est également configuré comme une butée en hauteur réglable, la force emmagasinée dans le ressort de pression (14) se composant d'une fraction de précontrainte et d'une fraction de tension provoquée par l'ajustage de la hauteur de la tête magnétique (H).

5. Appareil selon la revendication 4, **caractérisé en ce** que la pièce de guidage est placée dans un palier (9) d'un arbre de moteur (11), configuré comme arbre de cabestan, situé à l'extérieur d'une cassette de bande magnétique.

6. Appareil selon la revendication 4 ou 5, **caractérisé en ce** que la butée en hauteur réglable pour l'ajustage de la hauteur de la tête magnétique (H) est formée par une vis sans tête (13) qui a prise sur la première zone d'extrémité latérale (1a) et par une saillie (12) placée sur le palier (9), pour produire la fraction de précontrainte du ressort de pression (14) à une position en hauteur donnée, qui présente un filet continu à travers lequel la vis sans fin (13) est vissée.

7. Appareil selon la revendication 5 ou 6, **caractérisé en ce** que le palier (9) avec la saillie (12) et la pièce de guidage de type pot pour l'élément glissant (2) forment une pièce de fabrication en une pièce.

8. Appareil selon l'une ou plusieurs des revendications 1 à 7, **caractérisé en ce** qu'une cheville de déviation de bande (16) est placée sur le châssis du dérouleur (8), cheville qui présente une extrémité supérieure (16a) configurée comme goujon fileté pour un écrou moleté (17) qui est réglable en hauteur au-dessus du châssis du dérouleur (8) et qui est en prise avec la seconde zone d'extrémité latérale (1e), écrou moleté qui sert aussi bien à l'ajustage de l'angle azimutal de l'entrefer de tête qu'au guidage vertical de la plaque de support (1) dans la seconde zone d'extrémité latérale (1e).

9. Appareil selon l'une ou plusieurs des revendications 1 à 5, **caractérisé en ce** que la jonction électrique de la tête magnétique (H) et des pièces de circuit correspondantes de l'appareil à bande magnétique qui traitent les signaux se fait par une carte imprimée flexible (5).
